# EUROPÄISCHE PATENTSCHRIFT

(11) **EP 3 526 105 B1**
(45) Veröffentlichungstag und Bekanntmachung des Hinweises auf die Patenterteilung: **09.12.2020**
(21) Anmeldenummer: 17783391.0
(22) Anmeldetag: 11.10.2017
(51) Int. Cl.: B62D 21/15, B62D 25/08, B60R 19/34

(54) **CRASHSTRUKTUR FÜR EIN FAHRZEUG**
CRASH STRUCTURE FOR A VEHICLE
STRUCTURE D'ABSORPTION DE CHOC POUR UN VÉHICULE

(30) Priorität: 12.10.2016 DE 102016012183
(43) Veröffentlichungstag der Anmeldung: 21.08.2019
(73) Patentinhaber: Audi AG, 85045 Ingolstadt (DE)
(72) Erfinder: ZIERER, Mario, 85084 Reichertshofen (DE); HAHN, Thomas, 851 13 Böhmfeld (DE); CLARKE, Matthew, 85080 Gaimersheim (DE); KAUFMANN, Anton, 93356 Teugn (DE); COMPTE, Marc, 85049 Ingolstadt (DE); SANDFORT, Markus, 86633 Neuburg/Donau (DE)
(86) Internationale Anmeldenummer: PCT/EP2017/001200
(87) Internationale Veröffentlichungsnummer: WO 2018/068894

(56) Entgegenhaltungen:
- EP-A1- 3 006 311
- WO-A1-2015/019167
- DE-A1-102013 019 522
- DE-A1-102014 216 478
- US-A1- 2016 101 751

## Beschreibung

Die Erfindung betrifft eine Crashstruktur für ein Fahrzeug gemäß der Gattung des Patentanspruchs 1.

Crashstrukturen für Fahrzeuge sind in zahlreichen Variationen bekannt und werden zur Absorbierung von auftretenden Kräften bei einem Unfall verwendet. Bei einem Unfall, bei welchem sich die Unfallgegner zu 100% bis zu 30% überdecken, können die auftretenden Kräfte beispielsweise über den Stoßfängerquerträger, Crashboxen und Längsträger bzw. Schwellerstrukturen des beaufschlagten Fahrzeugs durch Deformation dieser Strukturen absorbiert werden. Es ist zudem bekannt, dass die Endbereiche des Stoßfängerquerträgers über die korrespondierenden Längsträger in Fahrzeugquerrichtung hinausragen. An diesen Endbereichen kann jeweils ein in Richtung eines korrespondierenden Radhauses ragendes erstes Abstützelement angeordnet werden. Im Fall eines Unfalls mit geringer Überdeckung der Unfallgegner, beispielsweise bei einer Überdeckung von 25%, trifft das erste Abstützelement auf den korrespondierenden Längsträger auf. Durch einen Formschluss zwischen dem Abstützelement und dem Längsträger kann Unfallenergie auf den Längsträger übertragen werden und dadurch zumindest teilweise abgebaut werden.

Aus der DE 10 2014 216 478 A1 ist eine gattungsgemäße Crashstruktur für ein Fahrzeug bekannt, welche eine Längsträgeranordnung, einen Stoßfängerquerträger und ein Abstützelement umfasst. Der Stoßfängerquerträger ist an einem Ende der Längsträgeranordnung befestigt und ein Endabschnitt des Stoßfängerquerträgers kragt in Querrichtung über die Längsträgeranordnung hinaus. Das Abstützelement ist an dem Endabschnitt des Stoßfängerquerträgers befestigt und erstreckt sich über eine vorgegebene Länge in Fahrzeuglängsrichtung nach hinten. Bevorzugt erstreckt sich das Abstützelement im Wesentlichen parallel zu der Längsträgeranordnung. Das Abstützelement ist mit einem vorgegebenen Abstand zu der Längsträgeranordnung angeordnet bzw. ausgebildet. Zudem ist das Abstützelement derart ausgebildet und angeordnet, dass es im Fall einer Verformung des Endabschnitts des Stoßfängerquerträgers in Folge einer Kollision mit geringer Überdeckung der Unfallgegner, den Endabschnitt an der Längsträgeranordnung abstützt. Durch die Abstützung des Endabschnitts, ist eine weitere Verformung des Endabschnitts des Stoßfängerquerträgers in Richtung der Längsträgeranordnung gehemmt.

Aus der DE 10 2013 019 522 A1 ist eine Fahrzeugkarosserie bekannt, welche einen Querträger und mindestens einen Längsträger umfasst. An dem mindestens einen Längsträger sind Mittel zur Aufnahme von Kollisionsenergie vorgesehen, welche selektiv im Fall einer Kollision mit geringer Überdeckung der Unfallgegner, die Einleitung des Lastpfades in den mindestens einen Längsträger gewährleisten.

Der Erfindung liegt die Aufgabe zu Grunde, eine Crashstruktur für ein Fahrzeug bereitzustellen, welche ein verbessertes Crashverhalten bei Unfällen mit geringer Überdeckung der Unfallgegner aufweist.

Erfindungsgemäß wird die Aufgabe durch Bereitstellung einer Crashstruktur für ein Fahrzeug mit den Merkmalen des Patentanspruchs 1 gelöst. Vorteilhafte Ausführungsformen und Weiterbildungen der Erfindung sind in den abhängigen Ansprüchen angegeben.

Um eine Crashstruktur für ein Fahrzeug bereitzustellen, welche ein verbessertes Crashverhalten bei Unfällen mit geringer Überdeckung der Unfallgegner aufweist, ist jeweils ein zweites Abstützelement an Endbereichen von Endabschnitten eines Stoßfängerquerträgers angeordnet, welches in einer Unfallsituation mit geringer Überdeckung der Unfallgegner auf einen korrespondierenden Verbindungsbereich zwischen einer Crashbox und einem Längsträger auftrifft.

Unter einer Crashstruktur wird im Folgenden eine Baugruppe verstanden, welche zumindest einen Stoßfängerquerträger, zwei Crashboxen und zwei Längsträger umfasst. Der Stoßfängerquerträger weist einen Mittelabschnitt auf, welcher zwischen den beiden Längsträgern angeordnet ist. Zudem umfasst der Stoßfängerquerträger zwei Endabschnitte, welche jeweils über die in diesem Abschnitt angeordnete Crashbox mit dem korrespondierenden Längsträger verbunden werden. Die Endabschnitte weisen zudem Endbereiche auf, an welchen die Abstützelemente angeordnet sind. Der Stoßfängerquerträger kann an einer Fahrzeugfront und/oder an einem Fahrzeugheck angeordnet werden.

Bei einem Unfall mit geringer Überdeckung der Unfallgegner kann der betroffene Endabschnitt des Stoßfängerquerträgers durch die wirkenden Kräfte und/oder Energien deformiert werden. In vorteilhafter Weise werden die beiden korrespondierenden Abstützelemente mit dem Endabschnitt des Stoßfängerquerträgers in Richtung des betroffenen Längsträgers bewegt und treffen an zwei unterschiedlichen Auftreffbereichen auf den Längsträger auf. In vorteilhafter Weise können sich die beiden Abstützelemente mit dem Längsträger verzahnen und den Endabschnitt des Stoßfängerquerträgers hierbei am Längsträger abstützen. In vorteilhafter Weise können wirkende Kräfte an den beiden Auftreffbereichen über die Abstützelemente in den betroffenen Längsträger eingeleitet werden. Zudem kann eine weitere Bewegung des Endabschnitts in Richtung eines Fahrzeuginnenraums durch die Abstützwirkung der Abstützelemente erschwert oder vollständig verhindert werden. Dadurch kann ein Abgleiten des Fahrzeugs am Unfallgegner erzielt werden und in vorteilhafter Weise eine Überdeckung der Unfallgegner in Fahrzeugquerrichtung reduziert werden. Zudem kann durch das Abgleiten des Fahrzeugs eine Einleitung der wirkenden Kräfte und/oder Energien in ein korrespondierendes Radhaus zumindest erschwert werden und eine Strukturintegrität des Radhauses erhalten werden. Des Weiteren kann eine Verformung von anderen Elementen in diesem Bereich, wie beispielsweise eines Schürzenpackages des Stoßfängers reduziert oder vollständig unterbunden werden.

In vorteilhafter Ausgestaltung der erfindungsgemäßen Crashstruktur kann das zweite Abstützelement kürzer als das erste Abstützelement ausgeführt werden. Zudem kann das zweite Abstützelement zwischen einer Anschlussanordnung der Crashbox und dem ersten Abstützelement angeordnet werden. In vorteilhafter Weise bildet das kürzere innenliegende zweite Abstützelement eine innere Abstützung und das äußere längere Abstützelement eine äußere Abstützung des Endabschnitts aus. Durch die Abmessungen können die Abstützelemente einen Abstand des Endabschnitts zum Längsträger vorgeben. Zudem kann durch die Abmessungen der Abstützelemente eine Überdeckung des Radhauses durch den Endabschnitt vorgegeben werden und dadurch ein Eindringen des Unfallgegners in das Radhaus verhindert oder zumindest erschwert werden. Des Weiteren können durch die Abmessungen der Endabschnitte Auftreffpositionen der beiden Abstützelemente auf dem Längsträger vorgegeben werden.

In weiterer vorteilhafter Ausgestaltung der erfindungsgemäßen Crashstruktur kann das zweite Abstützelement mit einer Prallplatte der Crashbox verhaken und den Längsträger in Fahrzeuglängsrichtung deformieren. In vorteilhafter Weise können wirkende Kräfte und/oder Energien in den Längsträger eingeleitet werden, so dass Längsträger bei einem Unfall mit geringer Überdeckung der Unfallgegner in den Lastpfad miteinbezogen ist. Hierbei kann der Längsträger in Längsrichtung gestaucht und zur Fahrzeugmitte verformt werden. Dadurch kann der Längsträger in vorteilhafter Weise zum Antriebsaggregat bzw. zur stoßabgewandten Seite hin verblocken und auf diese Weise hohe Querkräfte aufbauen, welche zum Teilabgleiten des Fahrzeugs führen können.

In weiterer vorteilhafter Ausgestaltung der erfindungsgemäßen Crashstruktur kann das erste Abstützelement seitlich auf den Längsträger auftreffen und diesen in Fahrzeugquerrichtung verformen. In vorteilhafter Weise kann durch das Einleiten von Kräften und/oder Energien in Fahrzeugquerrichtung das Fahrzeugaggregat mit großer Masse oder andere geeignete Bauteile zum Energie- und/oder Kraftabbau mitgenutzt werden. Zudem können die wirkenden Kräfte und/oder Energien vom Fahrzeuginnenraum weg in Fahrzeugquerrichtung geleitet werden. Hierbei kann auch eine Belastung auf die A-Säule in vorteilhafter Weise reduziert werden und dadurch die Strukturintegrität des Fahrzeugs verbessert werden.

In weiterer vorteilhafter Ausgestaltung der erfindungsgemäßen Crashstruktur kann mindestens eines der beiden Abstützelemente einstückig mit dem Endbereich des Stoßfängerquerträgers ausgeführt werden. Zudem können die Endbereiche bzw. Endabschnitte des Stoßfängerquerträgers einstückig mit dem Mittelabschnitt des Stoßfängerquerträgers ausgeführt werden. So können die Endabschnitte beispielsweise an den Mittelabschnitt angeformt werden. Alternativ kann der Stoßfängerquerträger mehrteilig ausgeführt werden, wobei die Endabschnitte mit dem Mittelabschnitt beispielsweise über Schraubverbindungen verbunden werden können. Zudem können das mindestens eine Abstützelement und die Endabschnitte sowie der Mittelabschnitt jeweils als Strangpressprofil ausgeführt werden. Strangpressprofile sind in vorteilhafter Weise stabil und können einfach und kostengünstig hergestellt werden.

In weiterer vorteilhafter Ausgestaltung der erfindungsgemäßen Crashstruktur kann mindestens eines der beiden Abstützelemente keilförmig ausgeführt werden. In vorteilhafter Weise ermöglicht eine Keilform mit einem dem Längsträger zugewanden und spitzzulaufenden Endbereich ein einfaches Einhaken am Längsträger.

Ein Ausführungsbeispiel der Erfindung ist in der Zeichnung dargestellt und wird in der nachfolgenden Beschreibung näher erläutert. In der Zeichnung bezeichnen gleiche Bezugszeichen Komponenten bzw. Elemente, die gleiche bzw. analoge Funktionen ausführen. Hierbei zeigt:
- Fig. 1: eine schematische Darstellung eines unteren Ausschnitts eines Ausführungsbeispiels einer erfindungsgemäßen Crashstruktur für ein Fahrzeug in einer Ausgangsstellung,
- Fig. 2: eine schematische Darstellung des unteren Ausschnitts der erfindungsgemäßen Crashstruktur aus Fig. 1 beim Auftreffen eines Unfallgegners, und
- Fig. 3: eine schematische Darstellung eines oberen Ausschnitts der erfindungsgemäßen Crashstruktur aus Fig. 1 und 2.

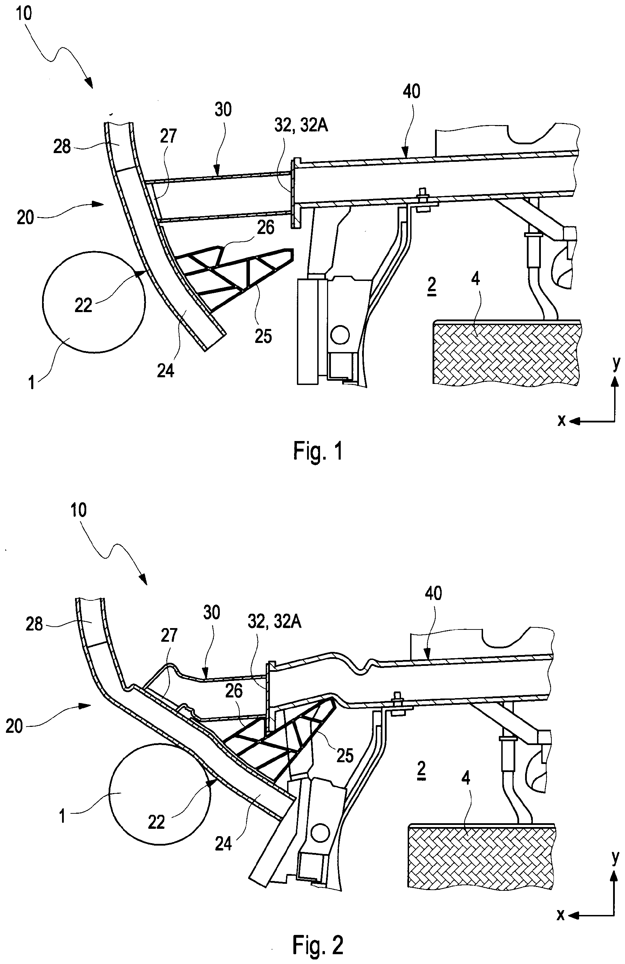

Wie aus Fig. 1 bis 3 ersichtlich ist, weist eine Crashstruktur 10 für ein Fahrzeug im dargestellten Ausführungsbeispiel einen Stoßfängerquerträger 20 auf, dessen Endabschnitte 22 jeweils über eine Crashbox 30 mit einem korrespondierenden Längsträger 40 verbunden sind. Die Endbereiche 24 der Endabschnitte 22 ragen jeweils über den korrespondierenden Längsträger 40 in Fahrzeugquerrichtung y hinaus. An den Endbereichen 24 der Endabschnitte 22 ist jeweils ein in Richtung eines korrespondierenden Radhauses 2 ragendes erstes Abstützelement 25 angeordnet und trifft in einer Unfallsituation mit geringer Überdeckung der Unfallgegner auf den Längsträger 40 auf.

Erfindungsgemäß ist jeweils ein zweites Abstützelement 26 an den Endbereichen 24 der Endabschnitte 22 angeordnet, welches in der Unfallsituation mit geringer Überdeckung der Unfallgegner auf einen korrespondierenden Verbindungsbereich 32 zwischen der Crashbox 30 und dem betroffenen Längsträger 40 auftrifft.

Wie aus Fig. 1 bis 3 weiter ersichtlich ist, ist nur ein in Fahrtrichtung linker Ausschnitt der erfindungsgemäßen Crashstruktur 10 dargestellt. Die Crashstruktur 10 umfasst an einer Fahrzeugfront zwei Längsträger 40, zwei Crashboxen 30 und den vorderen Stoßfängerquerträger 20, welcher einen Mittelabschnitt 28 und zwei Endabschnitte 22 aufweist. In Fig. 1 bis 3 ist nur ein Teil des Mittelabschnitts 28 und ein in Fahrrichtung linker Endabschnitt 22 des Stoßfängerquerträgers 20 dargestellt. Der Mittelabschnitt 28 ist zwischen den Anschlussanordnungen 27 der Crashboxen 30 angeordnet. Die Längsträger 40 verlaufen in Fahrzeuglängsrichtung x und werden jeweils an einem vorderen Endbereich mit den Crashboxen 30 verbunden.

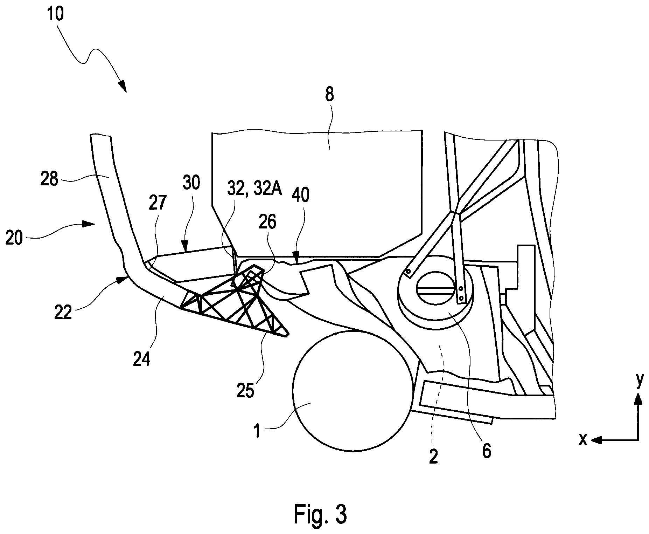

Bei einem Unfall mit ausreichender Überdeckung der Unfallgegner, können die auftretenden Kräfte beispielsweise über den Stoßfängerquerträger 20, die Crashboxen 30 und die Längsträger 40 des beaufschlagten Fahrzeugs durch Deformation dieser Strukturen 20, 30, 40 absorbiert werden. Bei einem Unfall mit ausreichender Überdeckung trifft ein Unfallgegner 1 mittig oder von der Mitte leicht versetzt auf den Stoßfängerquerträger 20 auf. Der Stoßfängerquerträger 20 leitet die wirkenden Kräfte und/oder Energien an die dahinter angeordneten Strukturen, d.h. an die Crashboxen 30 und die Längsträger 40 weiter. Bei einem Unfall mit geringer Überdeckung wird der Stoßfängerquerträger 20 nur an einem seiner beiden Endabschnitte 22 bzw. einem korrespondierenden Endbereich 24 des Endabschnitts 22 wie in Fig. 2 und 3 dargestellt ist, vom Unfallgegner 1 getroffen.

Wie aus Fig. 1 bis 3 weiter ersichtlich ist, ist das zweite Abstützelement 26 kürzer als das erste Abstützelement 25 ausgeführt. Zudem ist das zweite Abstützelement 26 zwischen der Anschlussanordnung 27 der Crashbox 30 und dem ersten Abstützelement 25 angeordnet.

Wie aus Fig. 2 und 3 weiter ersichtlich ist, verformt sich der betroffene Endabschnitt 22 des Stoßfängerquerträgers 20 beim Auftreffen des Unfallgegners 1. Dadurch werden die beiden Abstützelemente 25, 26 von den wirkenden Kräften und/oder Energien in Richtung des Längsträgers 40 bewegt. Hierbei verhakt sich das zweite Abstützelement 26 mit einer Prallplatte 32A der Crashbox 30 und deformiert den Längsträger 40 in Fahrzeuglängsrichtung x. Dadurch wird der Längsträger 40 gestaucht. Das erste Abstützelement 25 trifft gleichzeitig seitlich auf den Längsträger 40 auf und deformiert diesen in Fahrzeugquerrichtung y. Hierbei wird der Längsträger 40 in Richtung eines in Fig. 3 dargestellten Antriebsaggregats 8 gedrückt. Dadurch werden wirkende Kräfte und/oder Energien sowohl in Fahrzeuglängsrichtung x als auch in Fahrzeugquerrichtung y in den Längsträger 40 eingeleitet. Zudem verblockten die Abstützelemente 25, 26 und der Längsträger 40 mit dem Antriebsaggregat 8 und ermöglichen das Aufbauen hoher Querkräfte, welche zu einem Teilabgleiten des Fahrzeugs führen können. Über das Antriebsaggregat 8 können die wirkenden Kräfte und/oder Energien in eine stoßabgewandte Seite weitergeleitet werden, um weitere wirkende Kräfte und/oder Energien abzubauen. Zusätzlich oder alternativ können die wirkenden Kräfte und/oder Energien auch in nicht näher dargestellte andere geeignete Baugruppen oder Bauteile oder Aggregate eingeleitet werden, um das Teilabgleiten des Fahrzeugs oder die Verteilung von Kräften und/oder Energien oder den Abbau von Kräften und/oder Energien zu ermöglichen. Durch das Teilabgleiten des Fahrzeugs trifft der Unfallgegner 1 weiter außen am Fahrzeug auf und kann an einem Radhaus 2 vorbeigeleitet werden, so dass weniger Energien und/oder Kräfte auf ein im Radhaus 2 angeordnetes Rad 4 oder auf eine oberhalb vom Radhaus 2 angeordnete Stoßdämpferaufnahme 6 übertragen werden. Dadurch können wirkende Kräfte und/oder Energien vom Radhaus 2 nach außen weggeleitet werden und nicht in den Fahrzeuginnenraum gelangen, so dass sich ein verbesserter Insassenschutz ergibt.

Wie aus Fig. 1 bis 3 weiter ersichtlich ist, sind im dargestellten Ausführungsbeispiel der erfindungsgemäßen Crashstruktur 10 die Abstützelemente 25, 26 einstückig mit dem Endbereich 24 des Stoßfängerquerträgers 20 ausgeführt. Alternativ kann auch nur eines oder keines der beiden Abstützelemente 25, 26 einstückig mit dem Endbereich 24 ausgeführt werden.

Wie aus Fig. 1 bis 3 weiter ersichtlich ist, sind im dargestellten Ausführungsbeispiel der erfindungsgemäßen Crashstruktur 10 die Endabschnitte 22 des Stoßfängerquerträgers 20 an den Mittelabschnitt 28 des Stoßfängerquerträgers 20 angeformt. Das bedeutet, dass die Endabschnitte 22 und der Mittelabschnitt 28 des Stoßfängerquerträgers 20 einstückig ausgeführt sind. Alternativ kann der Stoßfängerquerträger 20 mehrteilig ausgeführt werden. Das bedeutet, dass die Endabschnitte 22 beispielsweise über Schraubverbindungen mit dem Mittelabschnitt 28 verbunden werden können.

Wie aus Fig. 1 bis 3 weiter ersichtlich ist, sind die beiden Abstützelemente 25, 26, der Endabschnitt 22 und der Mittelabschnitt 28 als Strangpressprofile ausgeführt. Alternativ können die Abstützelemente 25, 26 oder die Endabschnitte 22 oder der Mittelabschnitt 28 aus anderen geeigneten Materialien über geeignete Herstellungsverfahren hergestellt werden.

Wie aus Fig. 1 bis 3 weiter ersichtlich ist, sind die beiden Abstützelemente 25, 26 im dargestellten Ausführungsbeispiel jeweils keilförmig ausgeführt. Die Abstützelemente 25, 26 können in einem alternativen nicht dargestellten Ausführungsbeispiel auch andere geeignete Formen aufweisen. Zudem können die beiden Abstützelemente 25, 26 unterschiedliche Formen aufweisen.

### BEZUGSZEICHENLISTE

- 1: Unfallgegner
- 2: Radhaus
- 4: Rad
- 6: Stoßdämpferaufnahme
- 8: Antriebsaggregat
- 10: Crashstruktur
- 20: Stoßfängerquerträger
- 22: Endabschnitt
- 24: Endbereich
- 25: erstes Abstützelement
- 26: zweites Abstützelement
- 27: Anschlussanordnung an Crashbox
- 28: Mittelabschnitt
- 30: Crashbox
- 32: Verbindungsbereich mit Stoßfängerquerträger
- 32A: Prallplatte
- 40: Längsträger
- x: Fahrzeuglängsrichtung
- y: Fahrzeugquerrichtung

## Patentansprüche

1. Crashstruktur (10) für ein Fahrzeug, mit einem Stoßfängerquerträger (20), dessen Endabschnitte (22) jeweils über eine Crashbox (30) mit einem korrespondierenden Längsträger (40) verbunden sind, wobei Endbereiche (24) der Endabschnitte (22) jeweils über den korrespondierenden Längsträger (40) in Fahrzeugquerrichtung (y) hinausragen, wobei jeweils ein in Richtung eines korrespondierenden Radhaus (2) ragendes erstes Abstützelement (25) an den Endbereichen (24) angeordnet ist, welches in einer Unfallsituation mit geringer Überdeckung der Unfallgegner auf den korrespondierenden Längsträger (40) auftrifft, **dadurch gekennzeichnet, dass** jeweils ein zweites Abstützelement (26) an den Endbereichen (24) der Endabschnitte (22) angeordnet ist, welches in der Unfallsituation mit geringer Überdeckung der Unfallgegner auf einen korrespondierenden Verbindungsbereich (32) zwischen der Crashbox (30) und dem Längsträger (40) auftrifft.

2. Crashstruktur nach Anspruch 1, **dadurch gekennzeichnet, dass** das zweite Abstützelement (26) kürzer als das erste Abstützelement (25) ausgeführt ist.

3. Crashstruktur nach Anspruch 1 oder 2, **dadurch gekennzeichnet, dass** das zweite Abstützelement (26) zwischen einer Anschlussanordnung (27) der Crashbox (30) und dem ersten Abstützelement (25) angeordnet ist.

4. Crashstruktur nach einem der Ansprüche 1 bis 3, **dadurch gekennzeichnet, dass** das zweite Abstützelement (26) mit einer Prallplatte (32A) der Crashbox (30) verhakt und den Längsträger (40) in Fahrzeuglängsrichtung (x) deformiert.

5. Crashstruktur nach einem der Ansprüche 1 bis 4, **dadurch gekennzeichnet, dass** das erste Abstützelement (25) seitlich auf den Längsträger (40) auftrifft und diesen in Fahrzeugquerrichtung (y) deformiert.

6. Crashstruktur nach einem der Ansprüche 1 bis 5, **dadurch gekennzeichnet, dass** mindestens eines der beiden Abstützelemente (25, 26) einstückig mit dem Endbereich (24) des Stoßfängerquerträgers (20) ausgeführt ist.

7. Crashstruktur nach einem der Ansprüche 1 bis 6, **dadurch gekennzeichnet, dass** die Endabschnitte (22) des Stoßfängerquerträgers (20) einstückig mit einem Mittelabschnitt (28) des Stoßfängerquerträgers (20) ausgeführt ist.

8. Crashstruktur nach einem der Ansprüche 1 bis 6, **dadurch gekennzeichnet, dass** der Stoßfängerquerträgers (20) mehrteilig ausgeführt ist, wobei die Endabschnitte (22) mit dem Mittelabschnitt 28 verbunden sind.

9. Crashstruktur nach einem der Ansprüche 1 bis 8, **dadurch gekennzeichnet, dass** mindestens eines der beiden Abstützelemente (25, 26) und/oder die Endabschnitte (22) des Stoßfängerquerträgers (20) und/oder der Mittelabschnitt (28) des Stoßfängerquerträgers (20) als Strangpressprofile ausgeführt sind.

10. Crashstruktur nach einem der Ansprüche 1 bis 9, **dadurch gekennzeichnet, dass** mindestens eines der beiden Abstützelemente (25, 26) keilförmig ausgeführt ist.

## Claims

1. Crash structure (10) for a vehicle, having a bumper crossmember (20), the end portions (22) of which are in each case connected to a corresponding longitudinal member (4) via a crash box (30), wherein end regions (24) of the end portions (22) in each case project in the vehicle transverse direction (y) beyond the corresponding longitudinal member (40), wherein in each case a first supporting element (25), which protrudes in the direction of a corresponding wheelhouse (2), is arranged at the end regions (24), which in an accident situation with slight overlapping of the other party in the accident, impinges on the corresponding longitudinal member (40), **characterised in that** in each case a second supporting element (26) is arranged at the end regions (24) of the end portions (22), which in the accident situation with slight overlapping of the other party in the accident, impinges on a corresponding connecting region (32) between the crash box (30) and the longitudinal member (40).

2. Crash structure according to claim 1, **characterised in that** the second supporting element (26) is designed to be shorter than the first supporting element (25).

3. Crash structure according to claim 1 or 2, **characterised in that** the second supporting element (26) is arranged between a connecting arrangement (27) of the crash box (30) and the first supporting element (25).

4. Crash structure according to any one of claims 1 to 3, **characterised in that** the second supporting element (26) is hooked with an impact plate (32A) of the crash box (30) and deforms the longitudinal member (40) in the longitudinal direction of the vehicle (x).

5. Crash structure according to any one of claims 1 to 4, **characterised in that** the first supporting element (25) impinges laterally on the longitudinal member (40) and deforms said longitudinal member in the transverse direction of the vehicle (y).

6. Crash structure according to any one of claims 1 to 5, **characterised in that** at least one of the two supporting elements (25, 26) is designed in one piece with the end region (24) of the bumper crossmember (20).

7. Crash structure according to any one of claims 1 to 6, **characterised in that** the end portions (22) of the bumper crossmember (20) are designed in one piece with a middle section (28) of the bumper crossmember (20).

8. Crash structure according to any one of claims 1 to 6, **characterised in that** the bumper crossmember (20) is of multi-part design, wherein the end portions (22) are connected to the middle section (28).

9. Crash structure according to any one of claims 1 to 8, **characterised in that** at least one of the two supporting elements (25, 26) and/or the end portions (22) of the bumper crossmember (20) and/or the middle section (28) of the bumper crossmember (20) are designed as extruded profiles.

10. Crash structure according to any one of claims 1 to 9, **characterised in that** at least one of the two supporting elements (25, 26) is designed to be wedge-shaped.

## Revendications

1. Structure de collision (10) pour un véhicule avec une traverse de pare-chocs (20) dont les sections d'extrémité (22) sont connectées chacune par une boîte de collision (30) à une poutre longitudinale (40) correspondante, des zones d'extrémité (24) des sections d'extrémité (22) dépassant chacune de la poutre longitudinale (40) correspondante dans la direction transversale (y) du véhicule, un premier élément d'appui (25) dépassant en direction d'un passage de roue (2) correspondant étant disposé respectivement aux zones d'extrémité (24), lequel, dans une situation d'accident avec un faible chevauchement des usagers accidentés, heurte la poutre longitudinale (40) correspondante, **caractérisée en ce qu'**un second élément d'appui (26) est respectivement disposé aux zones d'extrémité (24) des sections d'extrémité (22), lequel, dans la situation d'accident avec un faible chevauchement des usagers accidentés, heurte une zone de connexion (32) correspondante entre la boîte de collision (30) et la poutre longitudinale (40).

2. Structure de collision selon la revendication 1, **caractérisée en ce que** le second élément d'appui (26) est conçu plus court que le premier élément d'appui (25).

3. Structure de collision selon la revendication 1 ou 2, **caractérisée en ce que** le second élément d'appui (26) est disposé entre un dispositif de connexion (27) de la boîte de collision (30) et le premier élément d'appui (25).

4. Structure de collision selon l'une quelconque des revendications 1 à 3, **caractérisée en ce que** le second élément d'appui (26) est accroché à une plaque de déviation (32A) de la boîte de collision (30) et déforme la poutre longitudinale (40) dans la direction longitudinale (x) du véhicule.

5. Structure de collision selon l'une quelconque des revendications 1 à 4, **caractérisée en ce que** le premier élément d'appui (25) heurte la poutre longitudinale (40) latéralement et la déforme dans la direction transversale (y) du véhicule.

6. Structure de collision selon l'une quelconque des revendications 1 à 5, **caractérisée en ce qu'**au moins l'un des deux éléments d'appui (25, 26) est conçu d'un seul tenant avec la zone d'extrémité (24) de la traverse de pare-chocs (20).

7. Structure de collision selon l'une quelconque des revendications 1 à 6, **caractérisée en ce que** les sections d'extrémité (22) de la traverse de pare-chocs (20) sont conçues d'un seul tenant avec une section centrale (28) de la traverse de pare-chocs (20).

8. Structure de collision selon l'une quelconque des revendications 1 à 6, **caractérisée en ce que** la traverse de pare-chocs (20) est conçue en plusieurs parties, les sections d'extrémité (22) étant connectées à la section centrale (28).

9. Structure de collision selon l'une quelconque des revendications 1 à 8, **caractérisée en ce qu'**au moins l'un des deux éléments d'appui (25, 26) et/ou les sections d'extrémité (22) de la traverse de pare-chocs (20) et/ou la section centrale (28) de la traverse de pare-chocs (20) sont conçus comme des profilés extrudés.

10. Structure de collision selon l'une quelconque des revendications 1 à 9, **caractérisée en ce qu'**au moins l'un des deux éléments d'appui (25, 26) est conçu en forme de coin.
